Europäisches Patentamt

European Patent Office

Office européen des brevets

(11) Publication number: **0 367 850 B1**

# EUROPEAN PATENT SPECIFICATION

(45) Date of publication of patent specification: **03.03.93**

(51) Int. Cl.5: **B23K 9/28**, B23K 9/02, B23K 9/12

(21) Application number: **88118578.9**

(22) Date of filing: **08.11.88**

(54) Apparatus for automatically fillet-welding object to be welded comprising rectangular bottom plate and four side plates tack-welded substantially vertically to said bottom plate.

(43) Date of publication of application:
**16.05.90 Bulletin 90/20**

(45) Publication of the grant of the patent:
**03.03.93 Bulletin 93/09**

(84) Designated Contracting States:
**DE FR GB IT SE**

(56) References cited:
**DE-A- 3 502 630**
**US-A- 4 704 513**

**PATENT ABSTRACTS OF JAPAN vol. 10, no. 207 (M-500)(2263) 19 July 1986, & JP-A-61 049783 (NIPPON KOKAN K.K.) 11 March 1986,**

**PATENT ABSTRACTS OF JAPAN vol. 8, no. 28 (M-274)(1465) 07 February 1984, & JP-A-58 187272 (SHIN NIPPON SEITETSU K.K.) 01 November 1983,**

(73) Proprietor: **NKK CORPORATION**
**1-2 Marunouchi 1-chome, Chiyoda-ku Tokyo(JP)**

(72) Inventor: **Sugitani, Yuji c/o NKK Corporation 1-2, 1-chome, Marunouchi Chiyoda-ku Tokyo(JP)**
Inventor: **Tamaoki, Naohiro c/o NKK Corporation 1-2, 1-chome, Marunouchi Chiyoda-ku Tokyo(JP)**

(74) Representative: **Henkel, Feiler, Hänzel & Partner Möhlstrasse 37 W-8000 München 80 (DE)**

EP 0 367 850 B1

**Description**

The present invention relates to an apparatus for automatically fillet-welding an object to be welded comprising a rectangular bottom plate and four side plates tack-welded substantially vertically to the bottom plate, along a weld line formed thereon.

BACKGROUND OF THE INVENTION

In order to fillet-weld an object to be welded comprising a rectangular bottom plate and four side plates tack-welded substantially vertically to the bottom plate, along a weld line formed thereon, it is the usual practice to automatically weld only the straight portion of the weld line by means of a self-travelling welding machine, and then manually weld the remaining four corner portions of the weld line.

The above-mentioned conventional welding method has however the following problems. Since the weld line is fillet-welded by automatic welding and manual welding, the weld bead height cannot be kept constant, thus tending to cause unstable quality of the fillet-welded joint and a low welding efficiency.

Under such circumstances, there is a demand for the development of a welding apparatus which permits automatic fillet-welding at a high efficiency of an object to be welded comprising a rectangular bottom plate and four side plates tack-welded substantially vertically to the bottom plate, along a weld line formed thereon, and maintenance of a constant weld bead height, thus allowing stabilization of quality of a fillet-welded joint, but such a welding apparatus has not as yet been proposed.

US-A-4,704,513 discloses a groove tracing control method for a fillet welding which is effected by rotating a welding torch and thereby rotating an arc at a high speed. The groove tracing control of the welding torch is effected in accordance with variations in the voltage waveform of the rotating arc. In this way the groove tracing is effected in real time in a noncontact manner with a high degree of accuracy.

JP-A-61-49 783 discloses an automatic welding machine for both side fillet welding. In this machine, a welding truck is advanced by operating a driving motor. When the truck advances, a guide roller is pressed against aggregates and the truck is guided along the wall of the aggregates. When it reaches the welding end point, a limit switch which has been installed in advance is engaged with a projecting piece, and the operation is stopped by closing of the switch.

JP-A-58-18 72 72 discloses a method of fillet welding for a frame block. According to this method, a welding machine is placed on a truck through a rotatable pedestal, and is provided with articulated arms for holding a welding torch. A shaft of this arm and the pedestal are rotated, and the torch is rotated with a corner set as the center of a virtual rotation. During the welding, process the torch is held in a manner that the angle of advance and the angle of sweepback are set to 0 - 40° and 15 - 0", respectively.

SUMMARY OF THE INVENTION

An object of the present invention is therefore to provide a welding apparatus which permits automatic fillet-welding at a high efficiency of an object to be welded comprising a rectangular bottom plate and four side plates tack-welded substantially vertically to the bottom plate, along a weld line formed thereon, and maintenance of a constant weld bead height, thus allowing stabilization of quality of a fillet-welded joint.

In accordance with the present invention there is provided an apparatus for automatically fillet-welding an object to be welded comprising the features of claim 1.

BRIEF DESCRIPTION OF THE DRAWINGS

Fig. 1 is a schematic plan view illustrating an embodiment of the fillet-welding apparatus of the present invention;
Fig. 2 is a schematic side view illustrating the fillet-welding apparatus of the present invention shown in Fig. 1;
Fig. 3 is a partial bottom view of the carriage illustrating the guide bar in the fillet-welding apparatus of the present invention;
Fig. 4(A) to 4(F) are schematic descriptive plan views illustrating the function of the fillet-welding apparatus of the present invention;
Fig. 5 is a block diagram illustrating control of the fillet-welding apparatus of the present invention by means of the welding controller;
Fig. 6 is a descriptive view illustrating control of the X-axis profiling mechanism by means of the X-axis profiling controller in the fillet-welding apparatus of the present invention;

2

Fig. 7 is a descriptive view illustrating control of the rotating speed of the base plate by means of the base plate rotation controller in the fillet-welding apparatus of the present invention;

Fig. 8 is a descriptive view illustrating determination of the completion of welding by means of the welding completion controller in the fillet-welding apparatus of the present invention; and

Fig. 9 is a block diagram illustrating steps for fillet-welding of the corner of the object to be welded by means of the fillet-welding apparatus of the present invention.

## DETAILED DESCRIPTION OF PREFERRED EMBODIMENTS

From the above-mentioned point of view, extensive studies were carried out to develop a welding apparatus which permits automatic fillet-welding at a high efficiency of an object to be welded comprising a rectangular bottom plate and four side plates tack-welded substantially vertically to the bottom plate, along a weld line formed thereon, and maintenance of a constant weld bead height, thus allowing stabilization of quality of a fillet-welded joint. As a result, there was obtained the following finding that it is possible to automatically fillet-weld at a high efficiency the above-mentioned object to be welded along a weld line formed thereon, by providing a base plate on a carriage capable of return-travelling on the bottom plate of the object to be welded so that the base plate can horizontally rotate around the vertical center axis of the carriage, mounting on the base plate a welding head comprising a welding nozzle for guiding a welding wire toward a weld line, an X-axis profiling mechanism for horizontally moving the welding nozzle, and a Y-axis profiling mechanism for vertically moving the welding nozzle, and controlling the X-axis profiling mechanism, the Y-axis profiling mechanism, a carriage travel motor and a base plate rotating motor by means of a welding controller.

The present invention was achieved on the basis of the above-mentioned finding. Now, the fillet-welding apparatus of the present invention is described in detail with reference to drawings.

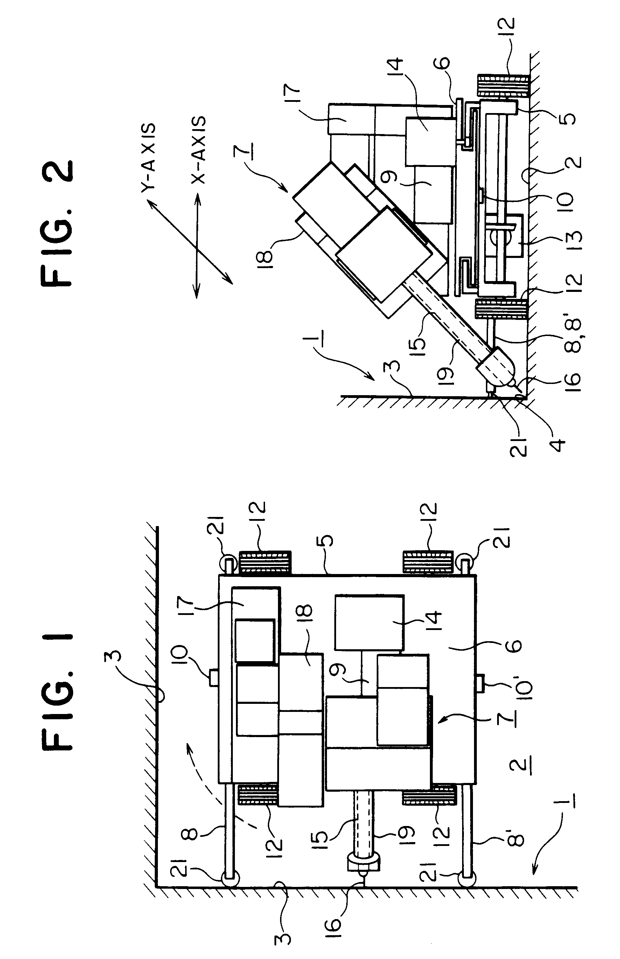

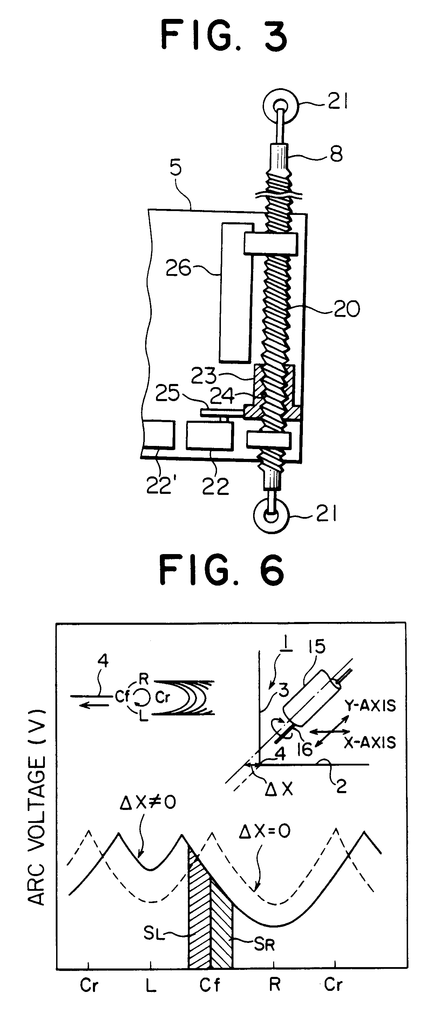

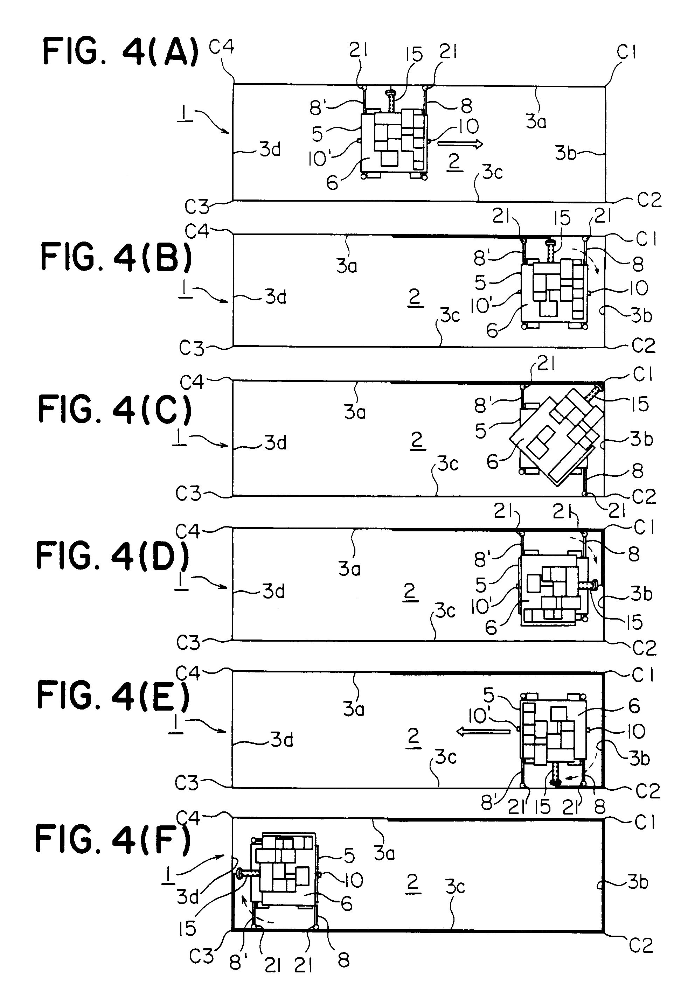

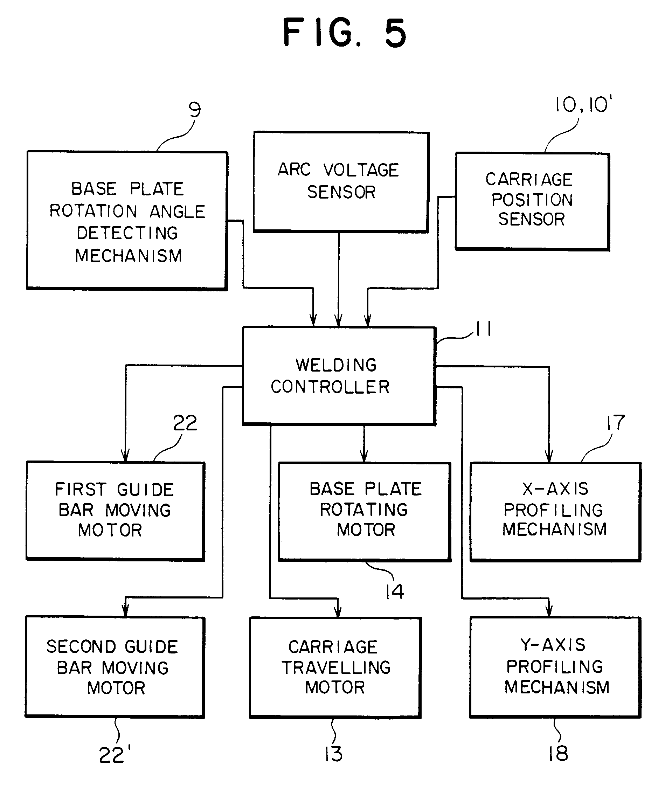

Fig. 1 is a schematic plan view illustrating an embodiment of the fillet-welding apparatus of the present invention; Fig. 2 is a schematic side view illustrating the fillet-welding apparatus of the present invention shown in Fig. 1; Fig. 3 is a partial bottom view of the carriage illustrating the guide bar in the fillet-welding apparatus of the present invention; Figs. 4(A) to 4(F) are schematic descriptive plan views illustrating function of the fillet-welding apparatus of the present invention; and Fig. 5 is a block diagram illustrating control of the fillet-welding apparatus of the present invention by means of the welding controller.

As shown in Figs. 1, 2, 3, 4(A) to 4(F), and 5, the apparatus of the present invention for automatically fillet-welding an object to be welded 1 comprising a rectangular bottom plate 2 and four side plates 3 tack-welded substantially vertically to the bottom plate 2, along a weld line 4 formed on the object to be welded 1, comprises: a carriage 5 return-travellable on the bottom plate 2 of the object to be welded 1 along the longitudinal direction thereof; a base plate 6 provided on the carriage 5 so as to be rotatable horizontally around the vertical center axis of the carriage 5; a welding head 7 mounted on the vase plate 6; two guide bars, i.e., a first guide bar 8 and a second guide bar 8', provided on the carriage 5 so as to be movable selectively and horizontally toward the side plate 3 parallel to the travelling direction of the carriage 5; a base plate rotation angle detecting mechanism 9 provided on the base plate 6; carriage position sensors 10 and 10', one each provided on each of the front side and the rear side of the carriage 5 relative to the travelling direction thereof; and a welding controller 11.

The carriage 5 has four wheels 12. The wheels 12 are rotated by a carriage travelling motor 13 provided on the carriage 5, whereby the carriage 5 return-travels on the bottom plate 2. The base plate 6 has an area substantially equal to that of the carriage 5. The base plate 6 are rotated by a base plate rotating motor 14 provided on the base plate 6, horizontally around the vertical center axis of the carriage 5.

The welding head 7 comprises a welding nozzle 15 for guiding a welding wire 16 toward the weld line 4 formed between the bottom plate 2 and the side plates 3 of the object to be welded 1, an X-axis profiling mechanism 17 for moving the welding nozzle 15 horizontally and at right angles to the weld line 4 so that the extension of the center axis of the welding nozzle 15 intersects the weld line 4, and a Y-axis profiling mechanism 18 for moving the welding nozzle 15 along the center axis thereof so that a gap between the tip of the welding wire 16 and the weld line 4 is kept at a prescribed distance.

The welding nozzle 15 rotates at a high speed in a certain direction around the center axis thereof. The welding wire 16 is fed through the welding nozzle 15 toward the weld line 4, eccentrically from the center axis of the welding nozzle 15. In Figs. 1 and 2, 19 is a shielding gas feeding nozzle provided concentrically on the outside of the welding nozzle 15. The shielding gas feeding nozzle 19 is secured to the welding head 7. Welding current is supplied between the welding wire 16 and the object to be welded 1 from a welding electric power source not shown, whereby an arc is produced between the tip of the welding wire 16 and the object to be welded 1. The thus produced arc acts a circular motion corresponding to the above-mentioned eccentricity of the welding wire 16 along with the rotation of the welding nozzle 15. The bottom plate 2 and the side plates 3 are fillet-welded together by the heat of the thus produced arc along the weld line 4 formed thereon. The arc and a molten pool are shielded from the open air by a shielding gas ejected from the shielding gas feeding nozzle 19.

The X-axis profiling mechanism 17 comprises, for example, a rack and pinion mechanism (not shown), and moves the welding nozzle 15, together with the Y-axis profiling mechanism 18, horizontally and at right angles to the weld line 4 as described above, in the X-axis direction shown by an arrow in Fig. 2. The Y-axis profiling mechanism 18 also comprises, for example, a rack and pinion mechanism (not shown), and moves the welding nozzle 15 along the center axis thereof as described above, in the Y-axis direction shown by an arrow in Fig. 2.

The first guide bar 8 and the second guide bar $8'$ are provided on the carriage 5 so as to be movable selectively and horizontally toward the side plate 3 parallel to the travelling direction of the carriage 5. As shown in Fig. 3, each of the first guide bar 8 and the second guide bar $8'$ has on the outer peripheral surface thereof a male screw thread 20, and has on each of the both ends thereof a roller 21 which is to be in contact with the side plate 3. Only the first guide bar 8 is illustrated in Fig. 3. A first guide bar moving motor 22 and a second guide bar moving motor $22'$ for moving the first guide bar 8 and the second guide bar $8'$ selectively and horizontally toward the side plate 3 are provided on the carriage 5. A bearing 23 which has on the inner peripheral surface thereof a female screw thread 24 matching with the above-mentioned male screw thread 20, engages with each of the first guide bar 8 and the second guide bar $8'$. The outer peripheral surface of the bearing 23 engages with a gear 25 secured to the rotation shaft of each of the first guide bar moving motor 22 and the second guide bar moving motor $22'$. Therefore, by rotating the respective bearings 23 by means of the first guide bar moving motor 22 and the second guide bar moving motor $22'$, the first guide bar 8 and the second guide bar $8'$ move selectively and horizontally toward the side plate 3. In Fig.3, 26 is a potentiometer for detecting the position of each of the first guide bar 8 and the second guide bar $8'$ by means of potential difference.

The base plate rotation angle detecting mechanism 9 comprises, for example, an encoder, and detects a rotation angle of the base plate 6 from the home position thereof. The carriage position sensors 10, $10'$ comprise, for example, photosensors, and detect the distance of the carriage from the side plate 3 perpendicular to the travelling direction of the carriage 5.

The welding controller 11 shown in Fig. 5 comprises an X-axis profiling controller, a Y-axis profiling controller, a carriage travel controller, a base plate rotation controller, a guide bar controller and a welding completion controller. An arc voltage detected by an arc voltage sensor, a rotation angle of the base plate 6 from the home position thereof, as detected by the base plate rotation angle detecting mechanism 9, and a distance of the carriage 5 from the side plate 3 perpendicular to the travelling direction of the carriage 5, as detected by the carriage position sensors 10, $10'$ are entered into the welding controller 11.

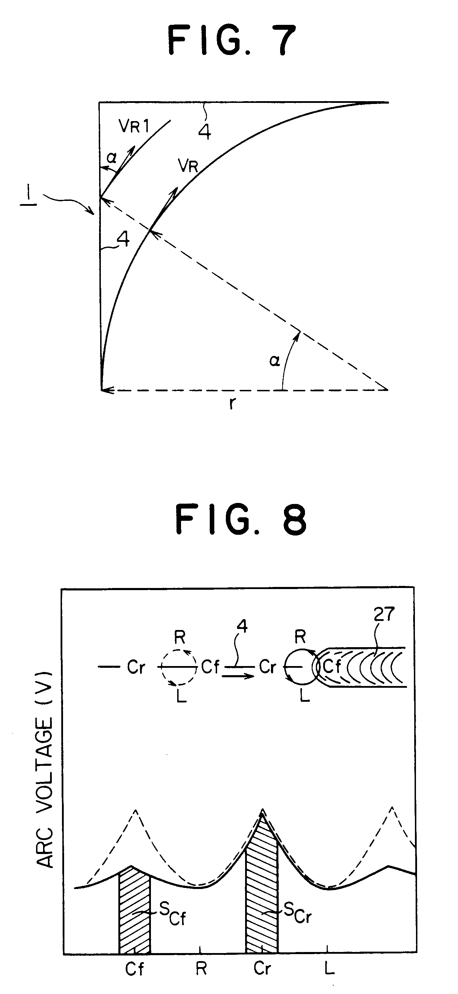

The X-axis profiling controller controls the X-axis profiling mechanism 17 in response to any one of voltage and current of the welding current so that the extension of the center axis of the welding nozzle 15 intersects the weld line 4. Control of the X-axis profiling mechanism 17 by means of the X-axis profiling controller is described below further in detail. Fig. 6 shows the waveform of voltage of the welding current, i.e., the waveform of arc voltage for each rotation of the welding nozzle 15. In Fig. 6, points "Cf", "Cr", "L" and "R" show positions of the welding wire 16 (i.e., the arc) during one rotation thereof, as viewed in a plan, in the weld line 4 of the object to be welded 1. More particularly, point "Cf" represents the downstream position in the welding direction, point "Cr", the upstream position in the welding direction, and points "L" and "R", the both side positions in the welding direction.

In Fig. 6, the broken line represents the waveform of arc voltage in the case where the extension of the center axis of the welding nozzle 15 intersects the weld line 4, i.e., in the case of $\Delta x = 0$. As shown in Fig. 6, when the extension of the center axis of the welding nozzle 15 intersects the weld line 4, arc voltage shows the highest value at points "Cf" and "Cr" where the distance between the tip of the welding wire 16 and the object to be welded 1 is the longest. On the other hand, arc voltage shows the lowest value at points "L" and "R" where the distance between the tip of the welding wire 16 and the object to be welded 1 is the shortest. Arc voltage has a waveform symmetrical relative to point "Cf" or "Cr".

In Fig. 6, the solid line represents the waveform of arc voltage in the case where the extension of the center axis of the welding nozzle 15 does not intersect the weld line 4, and deviates from the weld line 4 toward the side plate 3, i.e., in the case of $\Delta x \doteqdot 0$. As shown in Fig. 6, when the extension of the center axis of the welding nozzle 15 does not intersect the weld line 4, arc voltage has a waveform asymmetrical relative to point "Cf" or "Cr". Therefore, calculation is performed of the integral value "$S_L$" of arc voltage detected by the arc voltage sensor within a phase angle $\phi$ from point "Cf" toward point "L", and the integral value "$S_R$" of arc voltage also detected by the arc voltage sensor within a phase angle $\phi$ from point "Cf"

toward point "R", for each rotation of the welding nozzle 15, and then of the difference between these integral values "$S_L$" and "$S_R$". The X-axis profiling mechanism 17 is controlled by the X-axis profiling controller so that the thus calculated difference becomes zero to move the welding nozzle 15 horizontally and at right angles to the weld line 4. It is thus possible to cause the extension of the center axis of the welding nozzle 15 to intersect the weld line 4. The value of each of the above-mentioned phase angle $\phi$ from point "Cf" toward point "L" and the phase angle $\phi$ from point "$C_f$" toward point "R" should preferably be up to 90°. With a value of the phase angle $\phi$ of over 90°, the waveform of arc voltage is distorted under the effect of the molten pool present in the upstream in the welding direction, and this may make it impossible to conduct accurate control of the X-axis profiling mechanism 17 by means of the X-axis profiling controller. The above-mentioned control can also be accomplished with the use of the welding current instead of arc voltage described above.

The Y-axis profiling controller controls the Y-axis profiling mechanism 18 to move the welding nozzle 15 along the center axis thereof in response to any one of voltage and current of the welding current so that the gap between the tip of the welding wire 16 and the weld line 4 is kept at a prescribed distance.

The carriage travel controller controls the carriage travelling motor 13 provided on the carriage 5 in response to signals from the carriage position sensors 10, 10$'$ so as to cause the carriage 5 to travel or stop.

The base plate rotation controller controls a base plate rotating motor 14 provided on the base plate 6 in response to a signal from the base plate rotation angle detecting mechanism 9 so as to adjust the rotating speed of the base plate 6. Control of the base plate rotating motor 14 by means of the base plate rotation controller is described below further in detail. Fig. 7 shows the relationship between a swing radius of the welding nozzle 15 and a welding speed when welding a corner portion of the object to be welded 1 along the weld line 4 by means of the welding nozzle 15 swinging along with the rotation of the base plate 6 provided on the carriage 5. In Fig. 7, "$\alpha$" is a swing angle of the welding nozzle 15, and "r" is a standard swing radius of the welding nozzle 15 upon start of swing. If a swing speed component in the tangential direction of the swing arc when the welding nozzle 15 swings with the standard swing radius "r" is "$V_R$", a swing speed component in the tangential direction of the swing arc when the welding nozzle 15 swings while altering the swing radius so that the extension of the center axis of the welding nozzle 15 intersects the weld line 4 and the gap between the tip of the welding wire 16 and the weld line 4 is kept at a prescribed distance is "$V_R1$", and a welding speed of the welding nozzle 15 along the weld line 4 is "$V_W$", then the following formulae (1) and (2) hold:

$$V_R1 = \frac{r}{\cos \alpha \times r} \times V_R$$

$$= \frac{V_R}{\cos \alpha} \qquad \dots \dots \dots \quad (1)$$

$$V_W = \frac{V_R1}{\cos \alpha} \qquad \dots \dots \dots \quad (2)$$

The following formulae (3) and (4) can be derived from the above-mentioned formulae (1) and (2):

When $0 \leq \alpha < \frac{\pi}{4}$ :

$$V_R = V_W \times \cos^2\alpha \qquad (3)$$

When $\frac{\pi}{4} \leq \alpha < \frac{\pi}{2}$ :

$$V_R = V_W \times \sin^2\alpha \qquad (4)$$

These formulae (3) and (4) are entered in advance into the base plate rotation controller. The base plate rotation controller controls the base plate rotating motor 14 provided on the base plate 6 in response to a signal from the base plate rotation angle detecting mechanism 9, i.e., the swing angle "$\alpha$" of the welding nozzle 15 in accordance with the above-mentioned formulae (3) and (4). The welding speed "$V_W$" along the weld line 4 upon swing of the welding nozzle 15 is thus maintained at a prescribed value.

The guide bar controller controls selectively the first guide bar moving motor 22 and the second guide bar moving motor 22$'$ provided on the carriage 5 in response to signals from the carriage position sensors 10, 10$'$ and a signal from the base plate rotation angle detecting mechanism 9 so as to selectively and horizontally move the first guide bar 8 and the second guide bar 8$'$.

The welding completion controller controls the carriage travelling motor 13 and a welding electric power source not shown in response to any one of voltage and cuttent of the welding current so as to determine the completion of welding, cause the carriage 5 to stop travelling, and discontinue supply of the welding current. Control of the carriage travelling motor 13 and the welding electric power source by means of the welding completion controller is described below further in detail. Fig. 8 shows the waveform of voltage of the welding current, i.e., the waveform of arc voltage for each rotation of the welding nozzle 15 in the close vicinity of the welding completion position. In Fig. 8, points "Cf", "Cr", "L" and "R" show positions of the welding wire 16 (i.e., the arc) during one rotation thereof, as viewed in a plan, in the weld line 4 of the object to be welded 1. More particularly, point "Cf" represents the downstream position in the welding direction, point "Cr", the upstream position in the welding direction, and points "L" and "R", the both side positions in the welding direction, as has been described with regard to Fig. 6. In Fig. 8, 27 represents a weld bead formed in the initial welding.

In Fig. 8, the broken line represents the waveform of arc voltage when welding is carried out at a position apart from the portion where the initial welding has already been done and the weld bead 27 has been formed. As shown in Fig. 8, arc voltage shows the highest value at points "Cf" and "Cr", and shows the lowest value at points "L" and "R".

In Fig. 8, the solid line represents the waveform of arc voltage when welding is carried out at a position where point "Cf" of the welding wire 16 has reached the weld bead 27 formed in the initial welding, and point "Cr" of the welding wire 16 has not yet reached the weld bead 27. As shown in Fig. 8, arc voltage at point "Cf" of the welding wire 16, which has reached the weld bead 27 is lower than arc voltage at point "Cr" of the welding wire 16, which has not yet reached the weld bead 27. Therefore, calculation is performed of the integral value "$S_{Cf}$" of arc voltage detected by the arc voltage sensor within a certain phase angle around point "Cf", and the integral value "$S_{Cr}$" of arc voltage also detected by the arc voltage sensor within a certain phase angle around point "Cr", for each rotation of the welding nozzle 15, and these integral values "$S_{Cf}$" and "$S_{Cr}$" are compared. As a result of the above-mentioned comparison, when the integral value "$S_{Cf}$" becomes smaller than the integral value "$S_{Cr}$" in several successive comparisons, the welding completion controller determines the completion of welding. At this moment, the welding completion controller controls the carriage travelling motor 13 and the welding electric power source not shown so as to cause the carriage 5 to stop travelling and discontinue supply of the welding current. It is thus possible to automatically terminate welding at a position where the weld bead 27 formed in the initial welding exists. The above-mentioned control can be accomplished with the use of the welding current instead of arc voltage described above.

Now, an embodiment is described below with reference to Figs. 4(A) to 4(F), in which an object to be welded 1 comprising a rectangular bottom plate 2 and four side plates 3a, 3b, 3c and 3d tack-welded substantially vertically to the bottom plate 2 and having four corners C1, C2, C3 and C4 is automatically fillet-welded along a weld line formed thereon, with the use of the fillet-welding apparatus described above.

First, as shown in Fig. 4(A), the carriage 5 is placed on the bottom plate 2 so as to be travellable along the longitudinal direction thereof, with the welding nozzle 15 directed toward a weld line formed between the bottom plate 2 and the longer side plate 3a. Then, the first guide bar moving motor 22 and the second guide bar moving motor 22$'$ are driven by means of the guide bar controller to move both the first guide bar 8 and the second guide bar 8$'$ horizontally toward the side plate 3a so that the roller 21 fitted to one end of each of the first guide bar 8 and the second guide bar 8$'$ comes into contact with the side plate 3a. Then, the carriage travelling motor 13 is driven. As a result of driving of the carriage travelling motor 13, the carriage 5 travels in the direction shown by an arrow in parallel with the side plate 3a toward the shorter side plate 3b while being guided by the first guide bar 8 and the second guide bar 8$'$ in contact with the side plate 3a. Thus, the bottom plate 2 and the side plate 3a are fillet-welded together along the weld line formed thereon as shown in Fig. 4 (B), by means of the welding nozzle 15 rotating at a high speed around the center axis thereof. During this fillet-welding, as described above, the welding nozzle 15 is controlled by the X-axis profiling mechanism 17 and the X-axis profiling controller so that the extension of the center axis of the welding nozzle 15 intersects the weld line, and further, the welding nozzle 15 is controlled by the Y-axis profiling mechanism 18 and the Y-axis profiling controller so that the gap between the tip of the welding wire 16 and the weld line is kept at a prescribed constant distance.

The carriage position sensor 10, which is provided on the front side of the carriage 5, detects the distance of the carriage 5 from the shorter side plate 3b at right angles to the travelling direction of the carriage 5. The carriage travelling motor 13 is controlled by the carriage travel controller in response to a signal from the carriage position sensor 10, which indicates that the carriage 5 has reached the position at a prescribed distance from the side plate 3b, and the carriage 5 stops as shown in Fig. 4(B). The above-mentioned prescribed distance is predetermined on the basis of the swing radius of the welding nozzle 15 caused by the rotation of the base plate 6 and the distance of horizontal movement of the welding nozzle 15 by means of the X-axis profiling mechanism 17, and is entered in advance into the carriage travel controller. After stoppage of the carriage 5 in response to the signal from the carriage position sensor 10, the first guide bar moving motor 22 is driven by the guide bar controller, and the first guide bar 8 closer to the side plate 3b is horizontally moved toward the other longer side plate 3c on the side opposite to the longer side plate 3a as shown in Fig. 4(C) so that the roller 21 fitted to the other end of the first guide bar 8 comes into contact with the side plate 3c.

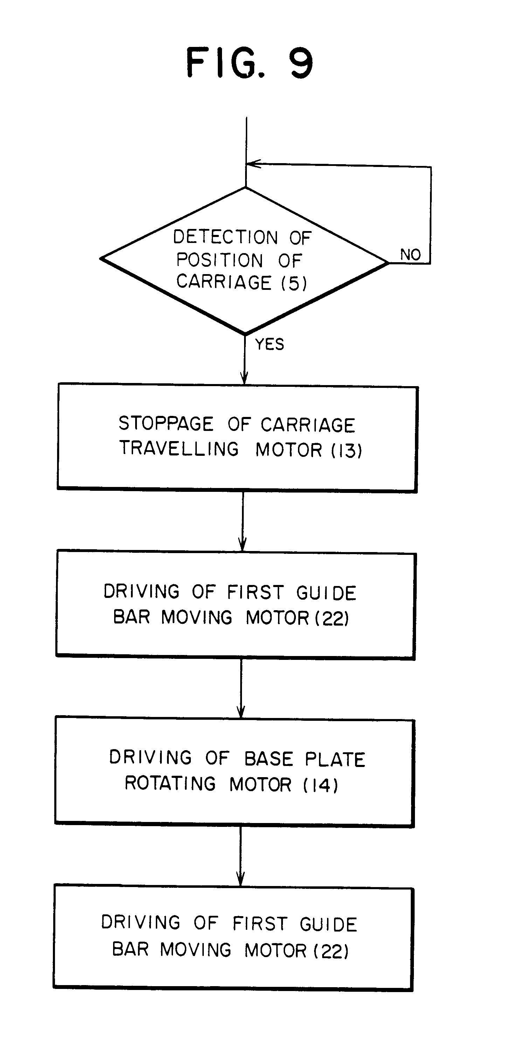

Subsequently, the base plate rotation motor 14 is driven, and the base plate 6 is rotated horizontally by 90° as shown by an arrow of dotted line in Fig. 4(B) around the vertical center axis of the carriage 5 while the rotation speed thereof is controlled. Control of the rotation speed of the base plate 6 is accomplished by detecting the rotation angle of the base plate 6 from the home position thereof by means of the base plate rotation angle detecting mechanism 9, and controlling the base plate rotating motor 14 by means of the base plate rotation controller in response to the thus detected rotation angle of the base plate 6. As the base plate 6 rotates, the welding nozzle 15 horizontally swings by 90°, and as shown in Figs. 4(C) and 4-(D), the corner C1 and the proximity thereof are fillet-welded at a prescribed constant welding speed along the weld line. During this fillet-welding of the corner portion C1, as described above, the welding nozzle 15 is controlled by means of the X-axis profiling mechanism 17 and the X-axis profiling controller so that the extension of the center axis of the welding nozzle 15 intersects the weld line, and further, the welding nozzle 15 is controlled by the Y-axis profiling mechanism 18 and the Y-axis profiling controller so that the gap between the tip of the welding wire 16 and the weld line is kept at a prescribed constant distance. After the base plate 6 thus rotates by 90°, the first guide bar moving motor 22 is driven by the guide bar controller in response to a signal form the base plate rotation angle detecting mechanism 9, and as shown in Fig. 4(D), the first guide bar 8 closer to the side plate 3b is moved horizontally toward the side plate 3a. Fig. 9 is a block diagram illustrating steps for fillet-welding of the corner portion as described above by means of the fillet-welding apparatus of the present invention.

Then, the base plate rotating motor 14 is driven, and the base plate 6 is rotated horizontally by further 90° as shown by an arrow of dotted line in Fig. 4(E) around the vertical center axis of the carriage 5 while the rotation speed thereof is controlled. As the base plate 6 rotates, the welding nozzle 15 horizontally swings by further 90°C, and as shown in Fig. 4(E), the corner C2 and the proximity thereof are fillet-welded at a prescribed constant welding speed along the weld line, as described above. The bottom plate 2 and the side plate 3b are thus fillet-welded together along the weld line formed thereon.

Then, the first guide bar moving motor 22 and the second guide bar moving motor 22$'$ are driven by means of the guide bar controller, in response to a signal from the base plate rotation angle detecting mechanism 9, to move both the first guide bar 8 and the second guide bar 8$'$ horizontally toward the other longer side plate 3c so that the roller 21 fitted to the other end of each, of the first guide bar 8 and the second guide bar 8$'$ comes into contact with the side plate 3c, as shown in Fig. 4(E). Then, the carriage travelling motor 13 is driven. As a result of driven of the carriage travelling motor 13, the carriage 5 travels as chosen by an arrow in Fig. 4(E) in parallel with the side plate 3c toward the shorter side plate 3d while being guided by the first guide bar 8 and the second guide bar 8$'$ in contact with the side plate 3c. The bottom plate 2 and the other longer side plate 3c are thus fillet-welded together along the weld line formed thereon.

The other carriage position sensor 10$'$, which is provided on the rear side of the carriage 5, detects the distance of the carriage 5 from the other shorter side plate 3d at right angles to the travelling direction of the carriage 5. The carriage travelling motor 13 is controlled by the carriage travel controller in response to a signal from the carriage position sensor 10$'$, which indicates that the carriage 5 has reached the position at a prescribed distance from the side plate 3d, and the carriage 5 stops as shown in Fig. 4(F). Then, the base plate 6 rotates as described above with reference to Figs. 4(C), 4(D) and 4(E). Therefore, the corners C3 and C4 and the proximity thereof are fillet-welded by means of the welding nozzle 15 which swings along with the rotation of the base plate 6, whereby the bottom plate 2 and the other shorter side plate 3d are fillet-welded together along the weld line formed thereon.

Then, the carriage 5 travels in parallel with the longer side plate 3a again toward the shorter side plate 3b, and a portion not as yet welded between the bottom plate 2 and the longer side plate 3a is fillet-welded along a weld line formed thereon. When the carriage 5 reaches the already welded portion between the bottom plate 2 and the side plate 3a, the welding completion controller determines the completion of welding as described above. At this moment, the welding completion controller controls the carriage travelling motor 13 and the welding electric power source not shown so as to cause the carriage 5 to stop travelling and to cause the welding electric power source to discontinue supply of the welding current.

As described above, the object to be welded 1 comprising the rectangular bottom plate 2 and the four side plates 3a, 3b, 3c and 3d tack-welded substantially vertically to the bottom plate 2 and having the four corners C1, C2, C3 and C4 is automatically fillet-welded along the weld line formed thereon.

According to the fillet-welding apparatus of the present invention, as described above in detail, it is possible to automatically fillet-weld at a high efficiency an object to be welded comprising a rectangular bottom plate and four side plates tack-welded substantially vertically to the bottom plate, along a weld line formed thereon, while keeping a constant weld bead height and a stable quality of a fillet-welded joint, thus providing industrially useful effects.

**Claims**

1. An apparatus for automatically fillet-welding an object to be welded comprising a rectangular bottom plate and four side plates tack-welded substantially vertically to said bottom plate, comprising:

   a carriage (5) return-travellable on said bottom plate along the longitudinal direction thereof;

   a base plate (6) provided on said carriage (5) so as to be rotatable horizontally around the vertical center axis of said carriage;

   a welding head (7) mounted on said base plate (6), said welding head comprising a welding nozzle (15), rotating around the center axis thereof, for guiding a welding wire (16) toward a weld line of said object to be welded, an X-axis profiling mechanism (17) for moving said welding nozzle (15) horizontally and at right angles to said weld line so that the extension of the center axis of said welding nozzle (15) intersects said weld line, and a Y-axis profiling mechanism (18) for moving said welding nozzle (15) along the center axis thereof so that a gap between the tip of said welding wire (16) and said weld line is kept at a prescribed distance;

   two guide bars (8, 8′), provided on said carriage (5) so as to be movable selectively and horizontally toward said side plate parallel to the travelling direction of said carriage (5), for guiding travel of said carriage (5), in contact with said side plate;

   a base plate rotation angle detecting mechanism (9), provided on said base plate (6), for detecting a rotation angle of said base plate (6) from a home position thereof;

   carriage position sensors (10, 10′), one each provided on each of the front and rear sides of said carriage (5) relative to the travelling direction thereof, for detecting a distance of said carriage (5) from said side plate perpendicular to the travelling direction of said carriage (5); and

   a welding controller (11), said welding controller comprising an X-axis profiling controller for controlling said X-axis profiling mechanism (17) in response to any one of voltage and current of a welding current so that the extension of the center axis of said welding nozzle (15) intersects said weld line, a Y-axis profiling controller for controlling said Y-axis profiling mechanism (18) in response to any one of voltage and current of said welding current so that a gap between the tip of said welding wire (16) and said weld line is kept at a prescribed distance, a carriage travel controller for controlling a carriage travelling motor (13) provided on said carriage (5) in response to signals from said carriage position sensors (10, 10′) so as to cause said carriage (5) to travel or stop, a base plate rotation controller for controlling a base plate rotating motor (14) provided on said base plate (6) in response to a signal from said base plate rotation angle detecting mechanism (9) so as to adjust a rotating speed of said base plate (6), a guide bar controller for selectively controlling two guide bar moving motors (22, 22′) provided on said carriage (5) in response to signals from said carriage position sensors (10, 10′) and a signal from said base plate rotation angle detecting mechanism (9) so as to selectively and horizontally move said two guide bars (8, 8′), and a welding completion controller for controlling said carriage travelling motor (13) and a welding electric power source in response to any one of voltage and current of said welding current so as to determine the completion of welding, cause said carriage (5) to stop travelling, and discontinue supply of said welding current.

**Patentansprüche**

1.  Gerät zum selbsttätigen Kehlnahtschweißen eines Schweißgegenstands, bestehend aus einer rechteckigen Bodenplatte und vier im wesentlichen lotrecht zur Bodenplatte heftgeschweißten Seitenplatten, umfassend:

    einen auf der Bodenplatte in deren Längsrichtung rücklaufverfahrbaren Wagen (5),

    eine Grundplatte (6), die auf dem Wagen (5) so angeordnet ist, daß sie waagerecht um die lotrechte Mittelachse des Wagens drehbar ist,

    einen an der Grundplatte (6) montierten Schweißkopf (7) mit einem Schweißdrahthalter (15), der um seine Mittelachse herum drehbar ist, zum Führen eines Schweißdrahts (16) in Richtung auf eine Schweißlinie des zu verschweißenden Gegenstands, einen X-Achsen-Nachführmechanismus (17) zum Bewegen des Schweißdrahthalters (15) in waagerechter Richtung und unter einem rechten Winkel zur Schweißlinie, derart, daß die Verlängerung der Mittelachse des Schweißdrahthalters (15) die Schweißlinie schneidet, und einen Y-Achsen-Nachführmechanismus (18) zum Bewegen des Schweißdrahthalters (15) längs seiner Mittelachse, so daß ein Spalt oder Abstand zwischen der Spitze des Schweißdrahts (16) und der Schweißlinie auf einer vorgeschriebenen Größe gehalten wird,

    zwei am Wagen (5) angeordnete Leitstangen (8, 8'), die selektiv und waagerecht in Richtung auf die Seitenplatte parallel zur Laufrichtung des Wagens (5), um die Bewegung des Wagens (5) zu führen, bewegbar sind und mit der Seitenplatte in Berührung stehen,

    einen auf der Grundplatte (6) vorgesehenen Grundplattendrehwinkel-Detektionsmechanismus (9) zum Detektieren oder Bestimmen eines Drehwinkels der Grundplatte (6) aus einer Ausgangsstellung derselben,

    jeweils an jeder der Vorder- und Rückseiten des Wagens (5) relativ zu dessen Laufrichtung vorgesehene Wagenstellungssensoren (10, 10') zum Detektieren oder Bestimmen eines Abstands des Wagens (5) von der Seitenplatte senkrecht zur Laufrichtung des Wagens (5) und

    eine Schweißsteuereinheit (11), umfassend eine X-Achsen-Nachführsteuereinheit zum Steuern des X-Achsen-Nachführmechanismus (17) in Abhängigkeit von Spannung und/oder Stromgröße eines Schweißstroms in der Weise, daß die Verlängerung der Mittelachse des Schweißdrahthalters (15) die Schweißlinie schneidet, eine Y-Achsen-Nachführsteuereinheit zum Steuern des Y-Achsen-Nachführmechanismus (18) in Abhängigkeit von Spannung und/oder Stromgröße des Schweißstroms in der Weise, daß ein Spalt oder Abstand zwischen der Spitze des Schweißdrahts (16) und der Schweißlinie auf einer vorgeschriebenen Größe gehalten wird, eine Wagenbewegungssteuereinheit zum Steuern eines am Wagen (5) vorgesehenen Wagenbewegungsantriebsmotors (13) in Abhängigkeit von Signalen von den Wagenstellungssensoren (10, 10'), um den Wagen (5) sich bewegen oder anhalten zu lassen, eine Grundplattendrehung-Steuereinheit zum Steuern eines auf der Grundplatte (6) vorgesehenen Grundplattendrehantriebsmotors (14) in Abhängigkeit von einem Signal vom Grundplattendrehwinkel-Detektionsmechanismus (9) zwecks Einstellung einer Drehgeschwindigkeit der Grundplatte (6), eine Leitstangensteuereinheit zum selektiven Steuern zweier am Wagen (5) vorgesehener Leitstangenbewegungsmotoren (22, 22') in Abhängigkeit von Signalen von den Wagenstellungssensoren (10, 10') und einem Signal vom Grundplattendrehwinkel-Detektionsmechanismus (9) zum selektiven und waagerechten Bewegen der beiden Leitstangen (8, 8') sowie eine Schweißabschlußsteuereinheit zum Steuern des Wagenbewegungsantriebsmotors (13) und einer elektrischen Schweißstromquelle in Abhängigkeit von Spannung und/oder Stromgröße des Schweißstroms zwecks Bestimmung des Abschlusses des Schweißens, um den Wagen (5) seine Bewegung beenden zu lassen und die Zufuhr des Schweißstroms zu unterbrechen.

**Revendications**

1.  Appareil de soudage d'angle automatique d'un objet à souder, l'objet comprenant une plaque inférieure rectangulaire et quatre plaques latérales soudées localement et sensiblement perpendiculaires à la plaque inférieure, comprenant :

un chariot (5) mobile en translation sur la plaque inférieure dans la direction longitudinale de celle-ci,

une plaque de base (6) placée sur le chariot (5) afin qu'elle puisse tourner horizontalement autour de l'axe central vertical du chariot,

une tête de soudage (7) montée sur la plaque de base (6), la tête de soudage comprenant une buse de soudage (15) tournant autour de son centre et destinée à guider un fil de soudage (16) vers une ligne de soudage de l'objet à souder, un mécanisme (17) de profilage d'axe Y destiné à déplacer la buse de soudage (15) horizontalement et perpendiculairement à la ligne de soudage afin que le prolongement de l'axe central de la buse de soudage (15) recoupe la ligne de soudure, et un mécanisme (18) de profilage d'axe Y destiné à déplacer la buse de soudage (15) vers le centre afin qu'un espace compris entre le bout du fil de soudage (16) et la ligne de soudage garde une dimension prescrite,

deux barres de guidage (8, 8') placées sur le chariot afin qu'elles soient mobiles sélectivement et horizontalement vers la plaque latérale parallèle à la direction de déplacement du chariot (5), afin qu'elles guident le déplacement du chariot (5), au contact de la plaque latérale,

un mécanisme (9) de détection d'angle de rotation de la plaque de base, disposé sur la plaque de base (6) et destiné à détecter l'angle de rotation de la plaque de base (6) par rapport à une position de repos,

des capteurs (10, 10') de position de chariot, chacun d'eux se trouvant du côté avant ou arrière du chariot (5) par rapport à la direction de déplacement de celui-ci, afin qu'ils détectent la distance comprise entre le chariot (5) et la plaque latérale perpendiculaire à la direction de déplacement du chariot (5), et

un organe (11) de commande de soudage, comprenant un organe de commande de profilage d'axe X destiné à commander un mécanisme (17) de profilage d'axe X en fonction de la tension ou de l'intensité d'un courant de soudage afin que le prolongement de l'axe central de la buse de soudage (15) recoupe la ligne de soudage, un organe de commande de profilage d'axe Y destiné à commander le mécanisme (18) de profilage d'axe Y en fonction de la tension ou de l'intensité du courant de soudage afin qu'un espace compris entre le bout du fil de soudage (16) et la ligne de soudage garde une dimension prescrite, un organe de commande de déplacement de chariot destiné à commander un moteur (13) de déplacement de chariot placé sur le chariot (5) en fonction de signaux provenant des capteurs (10, 10') de position de chariot, de manière que le chariot (5) se déplace ou s'arrête, un organe de commande de rotation de plaque de base destiné à commander un moteur (14) de rotation de plaque de base placé sur la plaque de base (6) en fonction d'un signal provenant du mécanisme (9) de détection de l'angle de rotation de la plaque de base afin que la vitesse de rotation de la plaque de base (6) soit ajustée, un organe de commande de barres de guidage destiné à commander sélectivement les moteurs (22, 22') de déplacement des deux barres de guidage, placées sur le chariot (5) en fonction des signaux provenant des capteurs (10, 10') de position de chariot et d'un signal du mécanisme (9) de détection de l'angle de rotation de la plaque de base, afin que les deux barres de guidage (8, 8') soient déplacées sélectivement en direction horizontale, et un organe de commande de fin de soudage destiné à commander le moteur (13) de déplacement de chariot et une alimentation électrique de soudage en fonction de la tension ou de l'intensité du courant de soudage, afin qu'il détermine la fin du soudage, qu'il provoque l'arrêt du déplacement du chariot (5) et qu'il interrompe la transmission du courant de soudage.

EP 0 367 850 B1

FIG. 2

FIG. I

11

# FIG. 3

# FIG. 6

FIG. 4(A)

FIG. 4(B)

FIG. 4(C)

FIG. 4(D)

FIG. 4(E)

FIG. 4(F)

# FIG. 5

BASE PLATE ROTATION ANGLE DETECTING MECHANISM — 9

ARC VOLTAGE SENSOR

CARRIAGE POSITION SENSOR — 10,10'

WELDING CONTROLLER — 11

FIRST GUIDE BAR MOVING MOTOR — 22

BASE PLATE ROTATING MOTOR — 14

X-AXIS PROFILING MECHANISM — 17

SECOND GUIDE BAR MOVING MOTOR — 22'

CARRIAGE TRAVELLING MOTOR — 13

Y-AXIS PROFILING MECHANISM — 18

14

# FIG. 7

# FIG. 8

# FIG. 9

```
              ┌──────────────────┐
              ▼                  │
         ╱ DETECTION OF ╲        │
        ╱  POSITION  OF  ╲  NO   │
        ╲  CARRIAGE (5)  ╱───────┘
         ╲              ╱
              │ YES
              ▼
    ┌────────────────────────┐
    │  STOPPAGE OF CARRIAGE  │
    │  TRAVELLING MOTOR (13) │
    └────────────────────────┘
              │
              ▼
    ┌────────────────────────┐
    │  DRIVING OF FIRST GUIDE│
    │  BAR MOVING MOTOR (22) │
    └────────────────────────┘
              │
              ▼
    ┌────────────────────────┐
    │  DRIVING OF BASE PLATE │
    │  ROTATING MOTOR (14)   │
    └────────────────────────┘
              │
              ▼
    ┌────────────────────────┐
    │  DRIVING OF FIRST GUIDE│
    │  BAR MOVING MOTOR (22) │
    └────────────────────────┘
```